(19) Europäisches Patentamt
European Patent Office
Office européen des brevets

(11) EP 3 252 514 A1

(12) EUROPEAN PATENT APPLICATION
published in accordance with Art. 153(4) EPC

(43) Date of publication:
06.12.2017 Bulletin 2017/49

(51) Int Cl.:
G02B 13/04 (2006.01)    G02B 13/18 (2006.01)

(21) Application number: 16743154.3

(86) International application number:
PCT/JP2016/051280

(22) Date of filing: 18.01.2016

(87) International publication number:
WO 2016/121550 (04.08.2016 Gazette 2016/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 26.01.2015 JP 2015012245

(71) Applicant: Hitachi Automotive Systems, Ltd.
Hitachinaka-shi, Ibaraki 312-8503 (JP)

(72) Inventors:
• BETSUI, Keiichi
  Tokyo 100-8280 (JP)
• MURATA, Seiji
  Tokyo 100-8280 (JP)

(74) Representative: MERH-IP Matias Erny Reichl
Hoffmann
Patentanwälte PartG mbB
Paul-Heyse-Strasse 29
80336 München (DE)

(54) **IMAGING LENS, IMAGING DEVICE USING SAME, AND DISTANCE MEASURING SYSTEM**

(57)    The imaging lens ensures the wide shooting view angle, and required angular resolution over the entire shooting range. The imaging lens includes at least a first lens and a second lens. The first lens has a first surface on which a principal light beam is made incidence, and a second surface from which the principal light beam is emitted. The second lens has a third surface on which the principal light beam emitted from the first lens is made incidence, and a fourth surface from which the principal light beam is emitted. Upon incidence of the principal light beam on the first lens, an incident angle $\theta n$ at which the principal light beam is made incidence on the first surface at right angles is allowed to be positioned other than a center of the first surface.

*FIG. 11A*

*FIG. 11B*

**Description**

Technical Field

The present invention relates to an imaging lens, an imaging device using the same, and a distance measuring system.

Background Art

A general imaging device employs an imaging optical system utilizing a perspective projection as the projection system indicating the relation between an incident angle θ and an image height y as expressed by the following formula (1).

$$y(\theta) = f \cdot \tan\theta \qquad (1)$$

where f denotes a paraxial focal distance of the imaging optical system.
The perspective projection system as expressed by the formula (1) tends to largely change the image height per unit view angle at the wide-angle side apart from the optical axis of the imaging optical system. Widening of the shooting range requires a large imaging element for the purpose of taking the image height y. Assuming that the maximum imageable view angle is 90°, the image height y will diverge, requiring an imaging element with infinitely large size. Therefore, it is impossible to actualize the imaging optical system. The orthographic projection as expressed by a formula (2) is known as the projection system for wide-angle shooting with the finitely sized imaging element.

$$y(\theta) = f \cdot \sin\theta \qquad (2)$$

The use of the orthographic projection system as expressed by the formula (2) may form an image on the imaging element even at the incident angle θ of 90° because of the finite image height y. The use of the orthographic projection system may form the image on the imaging element at the half-face angle (maximum incident angle) up to 90°. The optical system with projection property as expressed by the following formula (3) may be used for shooting at the view angle wider than that of orthographic projection (see Patent Literature 1).

$$y = a \cdot f \cdot \sin(b \cdot \theta) \qquad (3)$$

where $0 < a < \sin\theta max$, $b = \pi/(2 \cdot \theta max)$, f: paraxial focal distance of entire system, θ:incident angle (diagonal incident angle in radians), θmax: maximum incident angle (maximum diagonal incident angle in radians), y: actual image height on the light receiving surface of the imaging element.

Citation List

Patent Literature

PTL 1: Japanese Patent Laid-Open No. 2004-354572

Summary of Invention

Technical Problem

Using the projection system which allows imaging at relatively wide view angle like the orthographic projection, the image is formed on the imaging element under compression at peripheral region compared with the center region. Therefore, more information is likely to be lost as the region approaches the periphery. The rate of change in the image height per unit incident angle of the orthographic projection is expressed by the following formula (4). This shows that the change rate at the peripheral region is smaller than the one at the center region.

$$dy(\theta)/d\theta = f \cdot \cos\theta \qquad (4)$$

In other words, the amount of change in the angle per unit image height at the peripheral region is larger than the one at the center region. This indicates that the image is compressed in the peripheral region, that is, the information per unit pixel on the imaging element is lost.

The use of the above-described optical system allows pick-up of the image at wider view angle. However, the compressed image in the peripheral region may cause inconvenience of some sort. Such inconvenience may be compensated by the post processing for expanding the optically picked up data under compression, corresponding to the imaged data in the peripheral region with large incident angle. Because of the lost information, the above-described process requires interpolation. Expansion of the data may result in image degradation. As an extreme example, at the half-face angle $\theta$ set to 90°, the amount of change in the image height per unit incident angle is zero. In this case, there is no resolution for the incident angle $\theta$ which allows expression by the pixel on the imaging element. The amount of imaging information becomes smaller around the point at $\theta$=90°.

The structure with wider view angle as disclosed in Patent Literature 1 will be discussed with respect to the change amount of image height per incident angle, that is, $dy(\theta)/d\theta$. The change amount is expressed by the following formula (5).

$$\text{dy}(\theta)/\text{d}\theta = a \cdot f \cdot b \cdot \cos(b \cdot \theta) \qquad\qquad (5)$$

Calculation of the formula (5) in the case of the half-face angle $\theta = \theta max$ as the maximum incident angle may result in the relation expressed by $dy(\theta max)/d\theta = a \cdot f \cdot \{\pi/(2 \cdot \theta max)\} \cdot \cos[\{\pi/(2 \cdot \theta max)\} \cdot \theta max] = a \cdot f \cdot \{\pi/(2 \cdot \theta max)\} \cdot \cos(\pi/2) = 0$. That is, as change in the image height per unit incident angle at the maximum incident angle is zero, the angular resolution at the incident angle is lost in the region around the maximum incident angle (half-face angle).

In view of the above-described problem of the prior art, the present invention has been made to provide the imaging lens, the imaging device using the same, and the distance measuring system, aiming at ensuring both widened shooting view angle and the required angular resolution over the entire shooting range.

Solution to Problem

The present invention provides the structure according to the claim as described below.

Specifically, the imaging lens according to the present invention includes at least a first lens and a second lens. The first lens has a first surface on which a principal light beam is made incidence, and a second surface from which the principal light beam is emitted. The second lens has a third surface on which the principal light beam emitted from the first lens is made incidence, and a fourth surface from which the principal light beam is emitted. Upon incidence of the principal light beam on the first lens, an incident angle $\theta n$ at which the principal light beam is made incidence on the first surface at right angles is allowed to be positioned other than a center of the first surface.

Advantageous Effects of Invention

The present invention provides the imaging lens, the imaging device using the same, and the distance measuring system, aiming at ensuring both widened shooting view angle and the required angular resolution over the entire shooting range.

Brief Description of Drawings

Figure 1 is a graph showing an example of a relation between an incident angle $\theta$ and an image height y of a projection system.
Figure 2 is a graph showing an example of a rate of change in the incident angle per image height with respect to the incident angle.
Figure 3 is a block diagram showing an example of a structure of a distance measuring system.
Figure 4 is a top view showing an example of a positional relation between the imaging units and a distance measurement object.
Figure 5 is a top view (partially plan view) showing an example of a position where an image of the object is formed on the imaging element in the positional relation as shown in Figure 4.
Figure 6 is a side view (partially plan view) showing an example of the positional relation between the imaging unit and the distance measurement object.

Figure 7 is an explanatory view representing a relation between an angular resolution and a measurable range, wherein Figure 7A shows an example of the imaging element with high angular resolution, and Figure 7B shows an example of the imaging element with low angular resolution.

Figure 8 is a graph showing an example of the view angle and the angular resolution required for the respective functions.

Figure 9 is a graph showing an example of a relation of the incident angle on the imaging lens according to the embodiment of the present invention with respect to the image height and a change rate of the incident angle per image height.

Figure 10 is a graph showing an example of a relation of the incident angle on another imaging lens according to the embodiment of the present invention with respect to a change rate of the incident angle per image height (angular resolution).

Figure 11 is an explanatory view representing the incident angle of a principal light beam incident on the imaging lens according to the embodiment of the present invention, wherein Figure 11A is a graph showing the incident angles of the principal light beam incidence on the respective refractive surfaces (lens surface), and Figure 11B is an explanatory view of positions of the respective refractive surfaces of the imaging lens.

Figure 12 is a view showing an exemplary structure of the imaging lens according to a first embodiment of the present invention.

Figure 13 is a view showing an exemplary structure of the imaging lens according to a second embodiment of the present invention.

Figure 14 is a view showing an exemplary structure of the imaging lens according to a third embodiment of the present invention.

Figure 15 is a view representing an improving effect derived from MTF of the imaging lens according to the third embodiment of the present invention, wherein Figure 15A represents the case that each of two lenses at the incident side has an aspherical surface on one side, and Figure 15B represents the case that each of two lenses at the incident side has aspherical surfaces on both sides.

Figure 16 is a view representing an improving effect derived from the curved image surface of the imaging lens according to the third embodiment of the present invention, wherein Figure 16A represents the case that each of two lenses at the incident side has an aspherical surface on one side, and Figure 16B represents the case that each of two lenses at the incident side has aspherical surfaces on both sides.

Figure 17 is a view showing an exemplary structure of the imaging lens according to a fourth embodiment of the present invention.

Figure 18 is a block diagram showing an example of the imaging device according to a fifth embodiment of the present invention.

Description of Embodiments

Embodiments of the present invention will be described as well as the conventional structure and disadvantages thereof referring to the drawings.

The explanation will be made with respect to the structure of the distance measuring system to which the imaging lens according to the present invention is principally applied, and requirements for application of the imaging lens to the distance measuring system. It is to be noted that application of the imaging lens of the present invention is not limited to the distance measuring system.

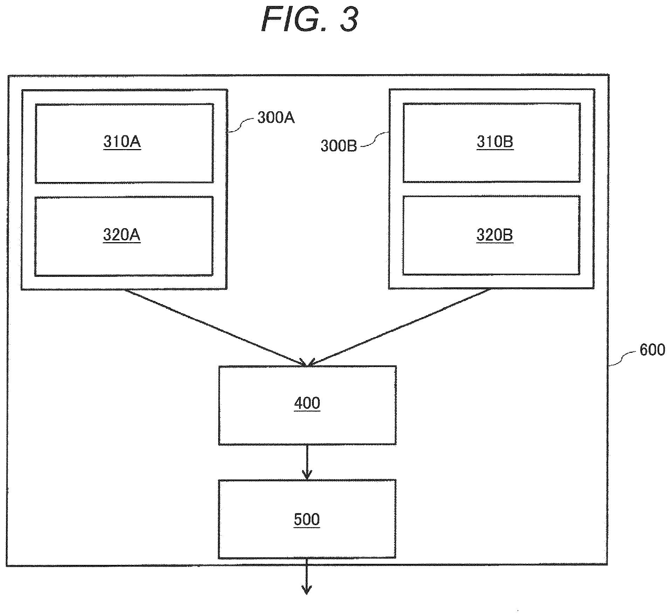

Figure 3 is a block diagram showing an exemplary structure of the distance measuring system.

The distance measuring system includes at least two imaging units 300, each of which includes an imaging optical system 310 and an imaging element 320, a video processor 400, a distance calculation unit 500, and a casing 600. The example of Figure 3 shows that two imaging units 300 are designed to be used for the stereo camera. The suffix is added to the code for distinguishing purpose, for example, the imaging units 300A and 300B, the imaging optical system 310A, and the imaging element 320A. However, the above-described elements may be expressed without using the suffix if distinguishment is not required.

The imaging optical system 310 constituted by an optical element such as a lens employs a photosensitive film and the imaging element as the image recording element at an approximated image formation position of the imaging system. The CCD (Charge Coupled Device) image sensor, and the CMOS (Complementary Metal Oxide) image sensor may be employed for the imaging element 320.

The video processor 400 functions in correcting the picked up video, specifically, conducts brightness adjustment, color adjustment, image distortion correction for facilitating extraction of information required for distance calculation. The above-described function may be omitted depending on quality of the obtained image, and required accuracy.

The distance calculation unit 500 executes the distance calculation process from videos derived from a plurality of imaging units 300A, 300B.

The above-described elements are fixed in the casing 600. Especially, as arrangement of the plurality of imaging units 300A, 300B becomes important parameter for distance measurement, those units have to be positioned with high accuracy. It is therefore preferable to use highly rigid material for forming the casing 600 into rigid structure.

The distance measuring system is configured to calculate how far the object is apart from the distance measuring system in reference to the imaging data derived from the imaging units 300A, 300B arranged in position. The system is capable of three-dimensionally calculating the position of the object to be imaged from the information indicating direction in which such an object exists.

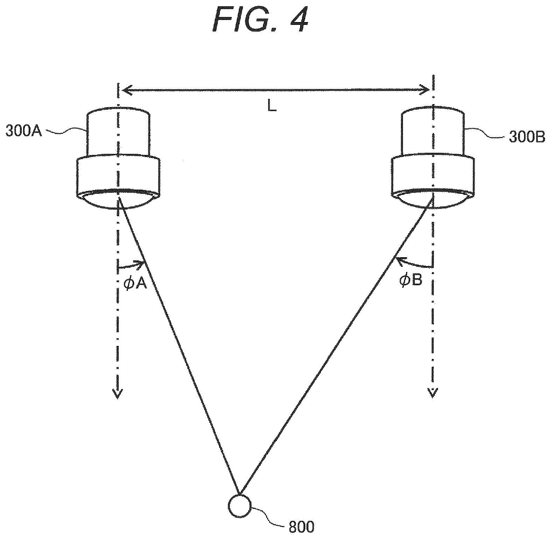

An exemplary structure of the distance measuring unit will be described referring to Figures 4 to 6.

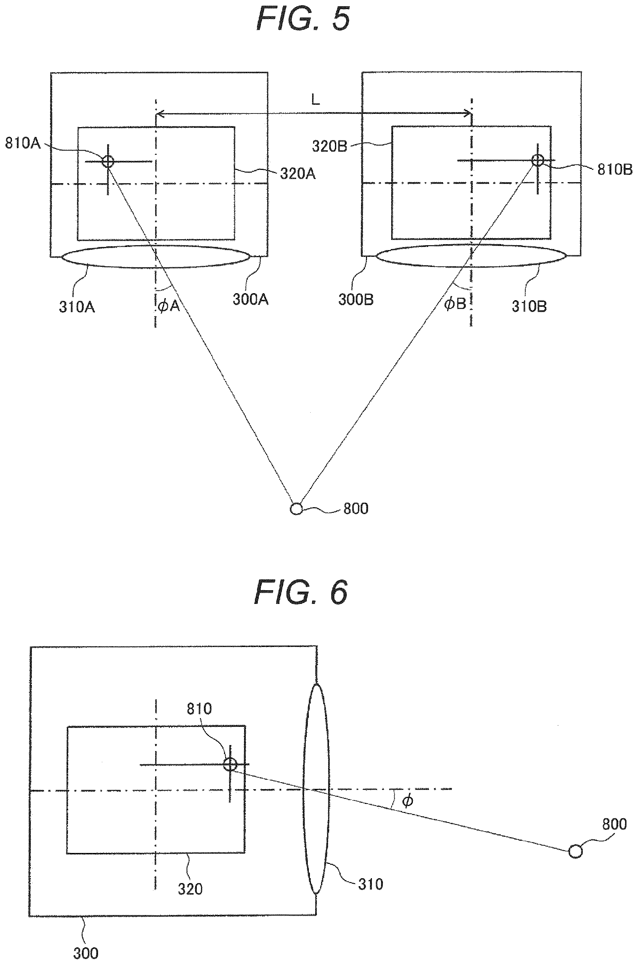

Figure 4 is a top view showing an example of a positional relation between the imaging units 300 and a distance measurement object 800. Figure 5 is a top view (partially plan view) showing an example of the position at which an image of the object is formed on the imaging element with respect to the arrangement as shown in Figure 4. Figure 6 is a side view of the structure as shown in Figure 5. Figure 6 shows the imaging unit 300 (units 300A and 300B) collectively. As for the imaging unit 300, the imaging element as shown in Figures 5 and 6 is disposed on the surface at right angles to the surface of the drawing. However, the imaging element is expressed parallel to the surface of the drawing for the purpose of simplifying the explanation. Refraction of light beam from the imaging optical system 310 is not considered in the drawing for the purpose of simplifying the explanation.

The light beam is emitted from the object 800 so that images of the object are formed at positions 810A, 810B of the imaging elements 320A and 320B via the imaging optical systems 310A and 310B, respectively. The images derived from the imaging units 300A, 300B are subjected to color adjustment and distortion adjustment executed by the video processor 400, and further subjected to pattern matching executed by the distance calculation unit 500. The pattern matching process is executed using algorithm that extracts feature points from the videos for geometrical and topological confirmation with respect to integrity of the object.

After the pattern matching process, a horizontal angle $\varphi A$ formed between an optical axis of the imaging optical system 310A and the object 800, a horizontal angle $\varphi B$ formed between the optical axis of the imaging optical system 310B and the object 800, and an elevation angle $\varphi$ are obtained in reference to the positions 810A, 810B on the imaging elements 320A, 320B on which images of the object 800 determined as being identical are formed, each distance between the imaging optical system 310A and the imaging element 320A, and the imaging optical system 310B and the imaging element 320B, and the respective optical properties of the imaging optical systems 310A and 310B. A distance L of the optical axis between the imaging optical systems 310A and 310B is constant as those elements are fixed in the casing 600. The distance from the optical axis to the object 800 is obtained through triangulation in consideration with the distance L, the horizontal angles $\varphi A$, $\varphi B$, the elevation angle $\varphi$, and optical properties of the imaging optical systems 310A, 310B.

It is possible to obtain the direction of the feature point of the object 800 with respect to the optical axis of the imaging unit 300, and the distance therebetween in reference to the data picked up by the imaging unit 300. This makes it possible to locate the object 800 three-dimensionally.

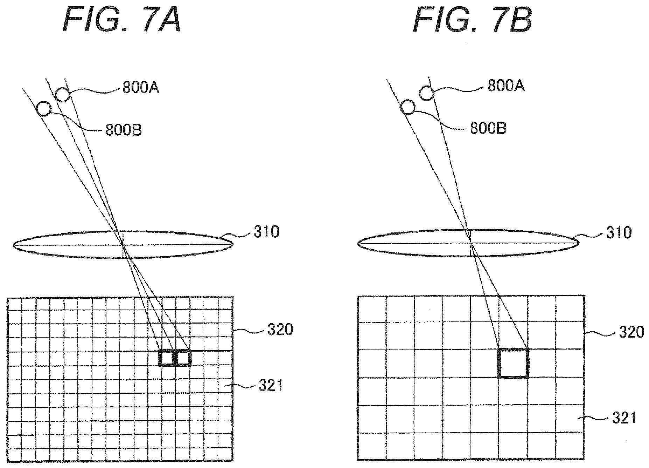

The angular resolution and the distance measurable range will be described referring to Figure 7.

As Figure 7 shows, the incident angle expressed by the single pixel has a width. The imaging unit 300 will recognize the object 800 as being in the same direction so long as the incident angle is in the range as indicated by straight lines. For example, in the case of high angular resolution as shown in Figure 7A, the incident angle captured by a pixel 321 of the imaging element 320 is narrow. Therefore, the plurality of objects 800A, 800B may be individually identified, resulting in improved distance measurement accuracy. On the other hand, in the case of low angular resolution as shown in Figure 7B, the incident angle captured by the single pixel of the imaging element 320 is widened. Therefore, the plurality of objects 800A, 800B cannot be individually identified, thus failing to accurately measure each distance of the objects 800A and 800B. Accordingly, it is necessary to raise the angular resolution of the incident angle which needs accurate distance measurement from the object 800.

The distance measuring system mounted to the front of the vehicle will be described.

The vehicle with automatic operation function has been researched and implemented for supporting the driver's operation, or driving without direct instruction of the driver. Specifically, for example, the system for supporting operations may be configured to alert the driver or apply braking force upon reduction in the distance from the car ahead so as to avoid collision against the car or passenger unexpectedly jumping out in front of the subject vehicle from the lateral direction, or prevent collision against the car ahead. Additionally, the vehicle may have the follow-up traveling function.

There may be the determination control method for actualizing the above-described functions using information about arrangement of objects that exist around the car, the moving direction, and the moving speed. The distance measuring system may be used for obtaining the above-described information. Although the use of the distance measuring system allows support for the driving operation and automatic operation, the condition to be measured such as distance, direction, and accuracy may vary depending on the respective usages and functions.

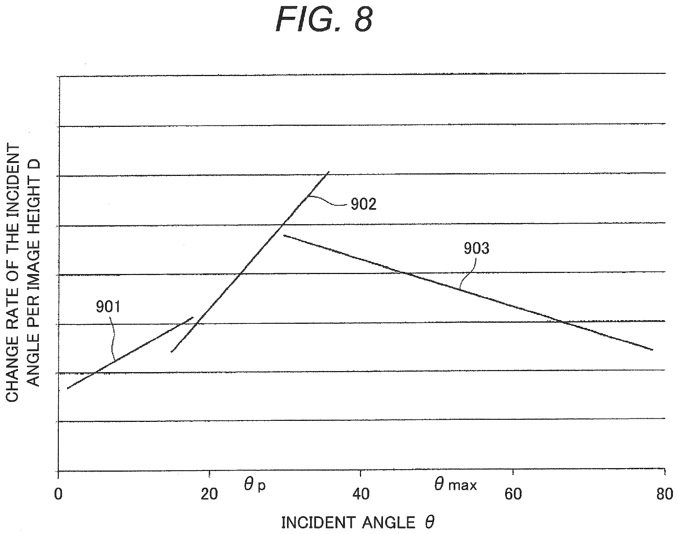

Figure 8 represents an example of the incident angle and angular resolution required for each function.

As for the function for automatically following the vehicle ahead (follow-up operation 901), the distance is expected to be sufficiently kept from the vehicle ahead on the freeway. The following distance is greatly influenced by the distance measurement error during travelling on the freeway. It is therefore necessary to conduct the distance measurement with high accuracy even in the case of the long distance from the area around the front. Accordingly, the angular resolution has to be high in the region where the incident angle is small. Compared with the narrow-angle side of the follow-up operation 901, at the wide-angle side, the effective follow-up target exists in the short distance range. Therefore, the follow-up operation 901 shows an increasing trend on the graph. Meanwhile, in the case of the region other than the front surface, it is recognized that no follow-up target exists. Therefore, the distance measurement does not have to be conducted.

As for the collision prevention function (collision prevention 902), the appropriate following distance has to be kept by measuring the distance from the vehicle ahead even when traveling in curve. Compared with the follow-up operation 901, it is necessary to measure the distance with respect to the region around the front surface at the wider view angle. The vehicle with possibility of collision may be considered to be in a relatively shorter distance. Therefore, the distance measurement as accurate as the follow-up operation 901 is not required. In the case of the collision prevention 902, compared with the narrow-angle side, at the wide-angle side, the range in which the object with the risk of collision exists is limited to the short distance. As a result, the collision prevention operation 902 shows an increasing trend on the graph. In the wider-angle range compared with the region around the front surface, there is little possibility of collision in the curve. Therefore, distance measurement does not have to be conducted.

As for the collision prevention function (collision prevention 903) in the case that the two traveling directions cross at substantially right angles such as the intersection, the passenger or vehicle jumping out from lateral direction has to be detected. It is therefore necessary to image the incident angle as wide as possible. Likewise the collision prevention 902, the passenger and the vehicle with possibility of collision are positioned in relatively short distance. Therefore, the distance measurement as accurate as the follow-up operation 901 is not required. Unlike the collision prevention 902, in the case of collision prevention 903, the object at the wide-angle side will be directed to the route of the subject vehicle. It is therefore necessary to measure the distance of the object in relatively long distance. In the case of the collision prevention 903 where the distance from the intersection is kept constant, the distance to the object at the wide-angle side becomes farther compared with the narrow-angle side. Therefore, the collision prevention 903 shows a decreasing trend on the graph.

As described above, the detection range may vary depending on the usage to be implemented. In the case of mounting the distance measuring system on the vehicle to achieve the object as described above, the long-distance shooting tends to be required for the front surface, and the shooting at wide incident angle tends to be required for the peripheral direction.

However, the angular resolution is necessary for conducting the long distance measurement as described above.

The problem of the generally employed imaging lens (perspective projection, orthographic projection) will be described in view of the imaging lens to be installed in the distance measuring system required for the long-distance shooting for the front surface, and the shooting at wide incident angle for the peripheral direction.

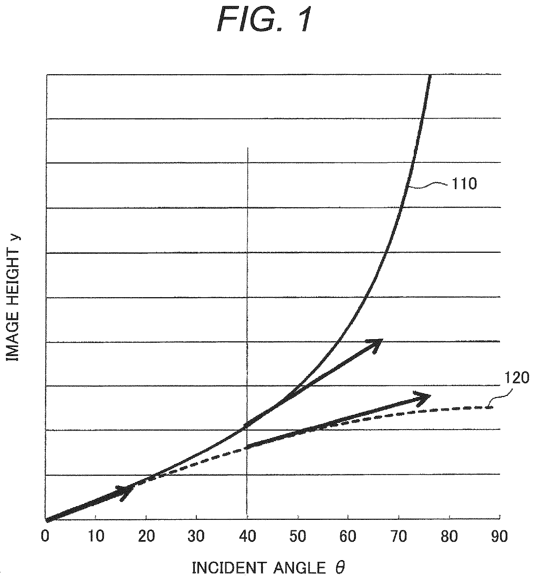

Figure 1 is a graph showing a relation between the incident angle $\theta$ and the image height y in the projection system, having the x-axis representing the incident angle $\theta$, and y-axis representing the image height y.

A solid line 110 indicates the characteristic curve of the perspective projection, and a broken line 120 indicates the characteristic curve of the orthographic projection. The data are plotted on the graph under the condition that the gradient at the incident angle $\theta=0$ at the center of the shooting range in each of the respective projection systems, that is, the change rate of the image height per incident angle $dy(0)/d\theta$ becomes the same.

Both the perspective projection 110 and the orthographic projection 120 exhibit the trend of increasing the image height as the incident angle becomes large. Upon determination of the shooting half-face angle (maximum incident angle), the resultant image height may vary depending on the projection system type. Taking the perspective projection 110 as the generally employed projection system of the imaging lens as an example, the image height y is expressed by the formula (1). That is, the image height y is increased in accordance with $\tan\theta$. Consequently, the wider view angle will increase the image height. Accordingly, the photosensitive film and the imaging element for imaging have to be enlarged. Especially, as the perspective projection 110 has the image height y diverged when the half-face angle $\theta$ is 90°. As a result, this projection system cannot be used for the case that the half-face angle $\theta$ becomes 90° or larger. Another projection system has to be used for the optical system with wider view angle.

The orthographic projection 120 is known as the typical projection system for the lens with wider view angle. In the case of the orthographic projection 120, the image height y satisfies the relation expressed by the formula (2). Unlike the perspective projection 110, the image height y hardly diverges even at the incident angle $\theta$ of 90°.

As the image recording unit, it is possible to use the photosensitive film and the imaging element for the imaging system at the image-forming position. The explanation will be made on the assumption that the imaging element is employed for converting the light intensity distribution of the image into the electric signal. If the CCD image sensor or the CMOS image sensor is employed as the imaging element, the change rate of image height per incident angle $dy(\theta)/d\theta$ becomes the index indicating how much the pixel is contained per unit incident angle. Specifically, in the case of rising gradient, the amount of pixels contained per unit incident angle is increased. This indicates the state with high angular resolution which allows shooting of fine incident angle for the single pixel.

The angular resolutions which differ depending on the projection system type will be compared from the point of view as described above. As Figure 1 shows, each of the two projection systems has the same gradient at the center (incident angle θ=0°). However, at the incident angle of approximately 40°, that is, at the relatively wider view angle side, the gradient dy(40)/dθ of the orthographic projection 120 is smaller than that of the perspective projection 110. Specifically, although each angular resolution of both types of the projection system is the same at the center (incident angle θ=0'), the angular resolution of the orthographic projection at the wide-angle side (incident angle θ=40°) is deteriorated compared with the perspective projection.

The evaluation may be made in reference to another index, that is, the change rate D(θ) of the incident angle θ per pixel. The following formula (6) expresses the change rate of the incident angle θ per pixel.

$$D(\theta) = 1/(dy(\theta)/d\theta) \qquad (6)$$

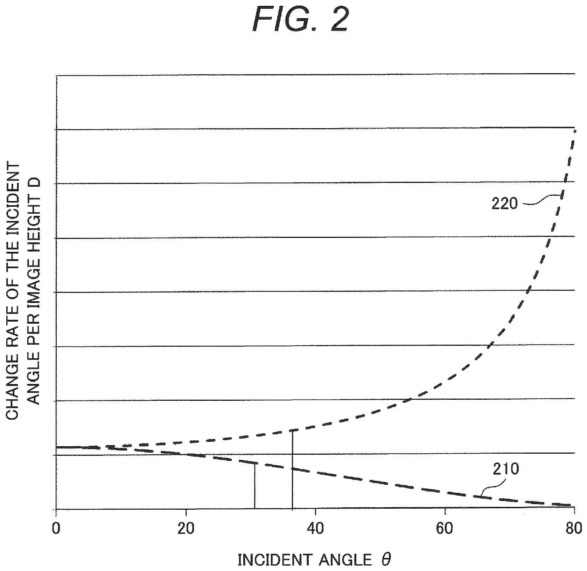

This means that the small D(θ) implies the small incident angle expressed by the single pixel, that is, high resolution state. Figure 2 represents the change rate D of the incident angle per image height.

Each of the perspective projection 210 and the orthographic projection 220 has the same value at D(0). However, at D(40), the incident angle of 40°, the value of the orthographic projection 220 is larger than that of the perspective projection 210. The change rate of the incident angle per pixel in the case of the orthographic projection is large. This indicates that the angular resolution at the wide-angle side tends to be deteriorated compared with the perspective projection.

Focusing on the image height, in the case of the perspective projection 110 of the generally employed lens, the image height is increased as the angle becomes wider (Figure 1). Shooting of the wide-angle region requires the large-sized imaging element. This may cause problems of cost increase of the imaging element, and increase in size of the optical system adapted to enlargement of the casing for fixing both the optical system and the imaging element.

Preferably, the imaging system allows shooting at wider view angle, and exhibits high angular resolution. However, as results of comparison between the projection systems indicate, the imaging element has to be enlarged to satisfy requirements of both the wider shooting view angle and the higher angular resolution. In the case of limiting the size of the imaging element, it is necessary to lower angular resolution or make the shooting range narrow to satisfy the above-described requirements.

Especially, in the case that the object 800 such as the vehicle is substantially in the distance (follow-up operation 901), the range captured by the single pixel is expanded in proportion to the distance. This may enhance probability that the plurality of objects 800A, 800B make incidence into the single pixel as shown in Figure 7B, thus requiring high angular resolution. Therefore, it is regarded as difficult for the generally employed imaging lens to satisfy the required high angular resolution.

The inventors of the present invention have examined with respect to the method of heightening the angular resolution. There are two methods for heightening the angular resolution, that is, the method for heightening the resolution of the imaging element 320 (expanding size of the imaging element, highly densifying the pixel of the imaging element), and the method for reducing the change rate of the incident angle per unit image height with respect to the relation between the incident angle of the imaging optical system 310 and the image height. However, the method of heightening the resolution of the imaging element 320 is limited owing to technical and physical difficulty, and cost increases. The inventors tried to heighten the angular resolution at the incident angle that requires accurate distance measurement by changing the imaging optical system 310 as the element that influences the angular resolution.

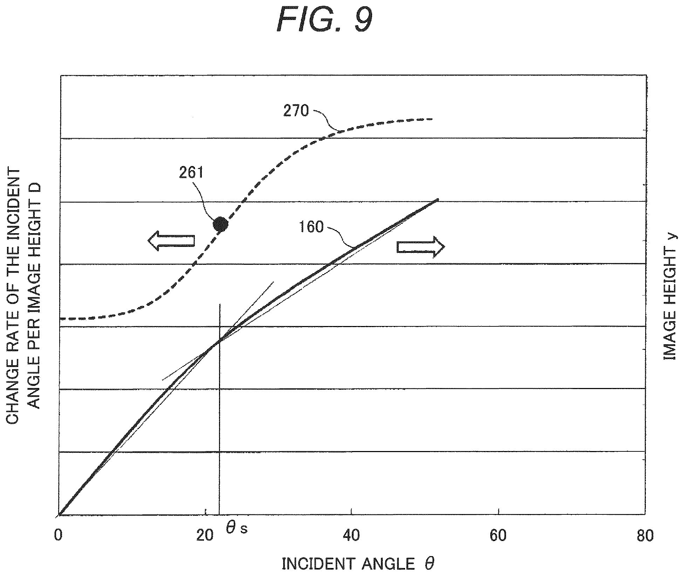

Properties of the imaging lens according to the embodiment will be described referring to Figure 9. Figure 9 is a graph representing an example of the relation between the image height y, and the change rate D of the incident angle θ per image height of the imaging lens according to the embodiment. A code 270 represents the change rate of the incident angle, a code 160 represents the image height, and a code 261 represents an inflection point of the change rate of the incident angle. The incident angle corresponding to the inflection point is a transition incident angle θs.

The imaging lens has the image height y(θ) satisfying the following inequality (7) with respect to the transition incident angle θs of the change rate D(θ) of the incident angle per image height.

$$1.5 < (y(\theta s)/\theta s)/\{(y(\theta max) - y(\theta s))/(\theta max - \theta s)\} < 3.0 \qquad (7)$$

When employing the imaging lens according to the embodiment for the device (distance measuring system) to be mounted on the vehicle, the detected distance required at each incident angle for the usage necessary for supporting the driver's operation, and the automatic operation is long at the center, and short in the peripheral direction. For example, assuming that the imaging element with resolution of 3M pixel is used, sufficient finite view angle of 90° cannot be obtained at the full-face angle in the case of the relation expressed by $(y(\theta s)/\theta s)/\{(y(\theta max)-y(\theta s))/(\theta max-\theta s)\} < 1.5$. On the assumption as described above, in the case of the relation expressed by $3.0<(y(\theta s)/\theta s)/\{(y(\theta max)-y(\theta s))/(\theta max-\theta s)\}$, sufficient angular resolution cannot be obtained, resulting in shortage of the measured distance.

The use of the imaging lens that satisfies the inequality (7) allows provision of the distance measuring system with wider shooting range in spite of long measured distance in the center region at small incident angle, and the short measured distance in the peripheral region at large incident angle.

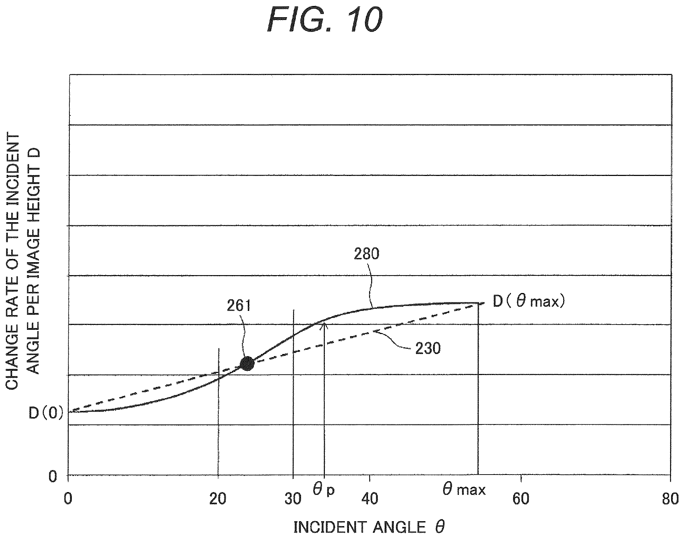

Figure 10 is a graph representing an example of the relation between the incident angle θ of another imaging lens according to the embodiment, and the change rate D of the incident angle per image height. A code 280 represents the change rate of the incident angle, and the code 261 represents the inflection point of the change rate of the incident angle. The incident angle corresponding to the inflection point is the transition incident angle θs likewise the one as shown in Figure 9. The code θp represents an arbitrary incident angle that satisfies the inequality of $0 < \theta p < \theta max$. A code 230 represents the change rate of the incident angle expressed by $\{(D(\theta max) - D(0))/\theta max\theta\}\theta p + D(0)$.

The imaging lens according to the embodiment is characterized by the inequality of $10°< \theta s < 30°$, where θs represents the transition incident angle of the change rate of the view angle per image height.

Upon application of the lens to the device to be mounted on the vehicle, it is preferable to set the transition incident angle θs of the change rate of the incident angle per image height in the range from 10° to 30°. The detected distance required at each incident angle for the respective usages necessary for supporting the driver's operation, and the automatic operation is short in the range from 10° to 30°. In other words, the required accuracy for the angular resolution is relatively low. Therefore, the incident angle ranging from 10° to 30° tends to be allowed in spite of low accuracy of the angular resolution. The transitional region is set for the angular resolution that is likely to vary so as to provide the distance measuring system capable of shooting at wider view angle. Additionally, the distance measuring system is further configured to perform the relatively long distance measurement at the center region with rigidity sufficient to prevent failure in the process executed by the on-board distance measuring system in spite of the distance calculation error caused by variation in the angular resolution.

In the case of shooting at wider view angle, the above-described structure ensures the change amount of image height per unit incident angle at the center to be larger than the one at the periphery of the image while keeping the change amount at the point around the maximum incident angle of the imaging optical system. In other words, it is possible to achieve both wider shooting view angle, and the required angular resolution over the entire shooting range.

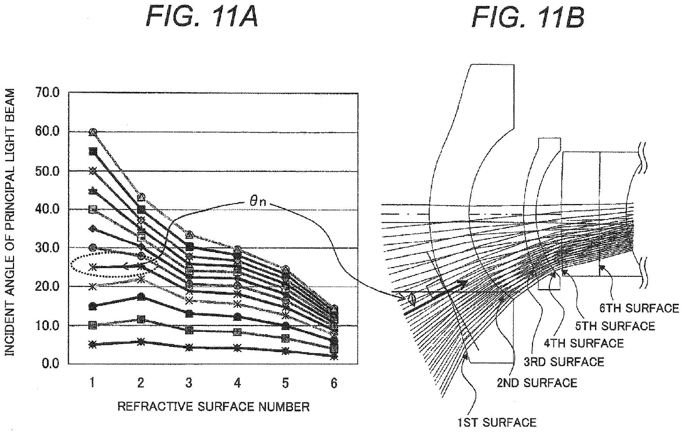

Referring to Figure 11, an explanation will be made with respect to features of the imaging lens structure to be considered for designing the lens with the above-described properties and sufficient resolution. Figure 11 is an explanatory view of the incident angle of the principal light beam incident on the imaging lens according to the embodiment. Specifically, Figure 11A is a graph representing the incident angle of principal light beam on the respective refractive surfaces (lens surfaces), and Figure 11B is an explanatory view of positions of the respective refractive surfaces of the imaging lens.

The imaging lens is characterized by the optical system designed to bring the incident angle θn at which the light beam is incident on the first surface at right angles close to θs. The first surface represents the surface of the first lens which is the farthest from the diaphragm, and the closest to the object. Preferably, the first surface at the farthest position from the diaphragm has the characteristic such as the inflection point of the angular resolution curve (curve indicating the change rate of the incident angle per image height with respect to the incident angle) at finite angle θs. Bringing the surface apart from the diaphragm may sufficiently thin the luminous flux passing through the lens surface at the specific incident angle. This makes it possible to bring the light beam toward the desired direction under the low impact of aberration. It is preferable to make the refractive angle on the refractive surface small so as to design the lens with small aberration. The imaging lens according to the embodiment is structured as the optical system with high power at the inner side of the inflection point θs of the angular resolution, and low power at the outer side. The above-described lens may have the refractive angles of the light beam distributed on the first surface both at the high-power side and the low-power side in balance. This allows the absolute value of the refractive angle on the first surface to become small.

Fig. 11A represents each change in the incident angle of the principal light beam incident on the first to the sixth surfaces of the imaging lenses (front and rear surfaces of the first lens, front and rear surfaces of the second lens, and front and rear surfaces of the third lens, in the order closer to the object). In the case of the imaging lens as described herein, the light beam incident on the first surface (front surface of the first lens) at the incident angle θn=25° is further incident on the second surface (rear surface of the first lens) without changing the angle. The state having the principal light beam passing through the surface without changing the angle represents that the principal light beam is incident on the surface at right angles.

The principal light beam is incident on the surface of the generally employed lens at right angles only on the axis (center). The lens according to the embodiment has the optical property which allows incidence of the light beam at right angles at the position except the one on the axis. Preferably, the incident angle θn of the principal light beam at the incident point at right angles is substantially the same as the angle θs of the inflection point on the angular resolution curve in view of the refractive angle distribution.

Embodiments according to the present invention will be described.

<First embodiment>

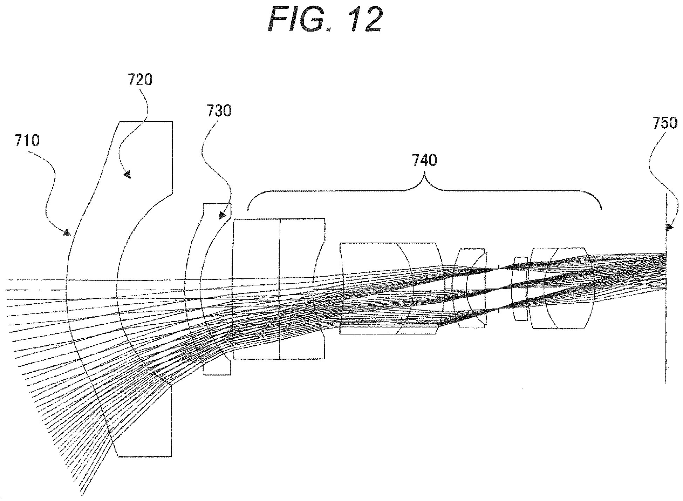

The structure of the imaging lens having the above-described optical property according to a first embodiment of the present invention will be described referring to Figure 12. The lens is constituted by two aspherical lenses 720, 730, and a spherical lens group 740. The explanation previously described in the embodiment, which is omitted herein will apply to this embodiment unless otherwise specified.

Detailed structure of the imaging lens is shown in Table 1. The 1st and the 3rd surfaces of the lens are aspherical. The parameter of the aspherical lens is expressed by the formula below the Table 1. As for figures in the column of the refractive index and Abbe number, the figure before the decimal point corresponds to the six decimal places of the refractive index, and the figure after the decimal point is 1/100 of Abbe number. For example, the figure "589100.61" indicates the refractive index of 1.589100, and Abbe number of 61.000.

[Table 1]

| Surface No. | Curvature radius | Spacing | Refractive index, Abbe number | | | | | | | |
|---|---|---|---|---|---|---|---|---|---|---|
| 1 | 11.50509 | 3.491056 | 589100.61 | | | | | | | |
| | | | Aspheric constant | | | | | | | |
| | K | | -1 | | | | | | | |
| | A | -1.08E-04 | B | 2.71E-05 | C | -1.25E-06 | D | 2.50E-08 | | |
| | E | -2.83E-10 | F | 1.96E-12 | G | -8.58E-15 | H | 2.12E-17 | | |
| | J | -2.30E-20 | | | | | | | | |
| 2 | 7.49445 | 4.723772 | | | | | | | | |
| 3 | 10.17677 | 1.068988 | 589100.61 | | | | | | | |
| | | | Aspheric constant | | | | | | | |
| | K | | 0 | | | | | | | |
| | A | -1.16E-03 | B | 1.16E-04 | C | -3.81E-06 | D | 3.78E-08 | | |
| | E | -1.64E-10 | F | 7.89E-14 | G | 4.99E-21 | H | -9.78E-23 | | |
| | J | 1.05E-24 | | | | | | | | |
| 4 | 6.71844 | 2.229137 | | | | | | | | |
| 5 | 95.08359 | 3.286046 | 784700.256 | | | | | | | |
| 6 | 182.41513 | 2.35292 | 589100.61 | | | | | | | |
| 7 | 7.2422 | 2.131632 | | | | | | | | |
| 8 | -13.14613 | 4.822955 | 670000.573 | | | | | | | |
| 9 | -4.47182 | 2.204571 | 666800.33 | | | | | | | |
| 10 | -7.48741 | 0.492697 | | | | | | | | |
| 11 | 6.87423 | 1 | 786500.501 | | | | | | | |
| 12 | 2.9249 | 1.298491 | 603200.423 | | | | | | | |
| 13 | 18.73328 | 0.944902 | | | | | | | | |
| STO | INFINITY | 0.882459 | | | | | | | | |
| 14 | 8.54713 | 1.001547 | 517300.693 | | | | | | | |
| 15 | 16.75176 | 0.1 | | | | | | | | |
| 16 | 9.99628 | 1.133279 | 922900.209 | | | | | | | |
| 17 | 4.24358 | 3.526661 | 517300.693 | | | | | | | |
| 18 | -5.33434 | 4.998861 | | | | | | | | |
| IMG | INFINITY | 0.001158 | | | | | | | | |

Parameter of aspherical lens

$$z = \frac{ch^2}{1+SQRT\{1-(1+k)c^2h^2\}} + Ah^4 + Bh^6 + Ch^8 + Dh^{10} + Eh^{12} + Fh^{14} + Gh^{16} + Hh^{18} + Jh^{20}$$

| | |
|---|---|
| Z | Sag amount of surface parallel to z-axis |
| C | Curvature at vertex of surface (CUY) |
| K | Conic coefficient (K) |

| | |
|---|---|
| $k = 0$ | ~ Spherical surface |
| $-1 < k < 0$ | ~ Ellipsoid with long axis along the optical axis |
| $k = -1$ | ~ Parabolic surface |
| $k < -1$ | ~ Parabolic surface |
| $k = -e^2$ , e denotes eccentricity | |
| if $k > 0$ | ~ Oblate spheroid (not conic section) is generated by rotating the ellipse around the short axis. |

$$k = e^2 / (1 - e^2)$$

e denotes eccentricity of the ellipse to be generated

A, B, C, D, E, F, G, H, J — Deformation modulus of 4th order, 6th order, 8th order, 10th order, 12th order, 14th order, 16th order, 18th order, and 20th order

In the case of pure conic surface, $A = B = C = D = E = F = G = H = I = J = 0$

$$h^2 = x^2 + y^2$$

The light beam incident on a first lens incident surface 710 is guided by the two aspherical lenses 720, 730 at the light beam incident side so that the desired relation between the image height and the incident angle is obtained. Then the image is formed by the subsequent spherical lens group 740 on a sensor 750. The smoothly changing virtual image of the substance has to be obtained by the aspherical lenses 720, 730 as the front lens group for the purpose of forming the image with sufficiently corrected aberration. Two aspherical lenses are required for ensuring the relation between the incident angle and the image height according to the embodiment, and the smooth virtual image of substance.

Those lenses and optical elements are positioned using the lens-barrel, the spacer and the like, and fixed. It is preferable to use metal or the material with appropriate rigidity for forming those elements so as not to be displaced owing to vibration and external impact.

The structure as shown in Figure 12 and Table 1 is capable of providing the imaging lens which allows the long-distance shooting for the front surface, and the shooting at wider incident angle in the peripheral direction.

Installing the imaging lens according to the embodiment in the imaging device allows the long-distance shooting for the front surface, and the shooting at wider incident angle for the peripheral direction. Application of the stereo camera having the imaging lens according to the embodiment installed, or two or more imaging devices to the distance measuring system as shown in Figure 3 allows the long distance measurement with high angular resolution for the front surface, and the short distance measurement at wider incident angle for the peripheral direction. Mounting the distance measuring system on the car makes it possible to actualize the function of automatically following the vehicle ahead, and the function of preventing collision in the curve or at the intersection.

The embodiment provides the imaging lens, the imaging device using the imaging lens, and the distance measuring system for ensuring both the wider shooting view angle, and the required angular resolution over the entire shooting range.

<Second embodiment>

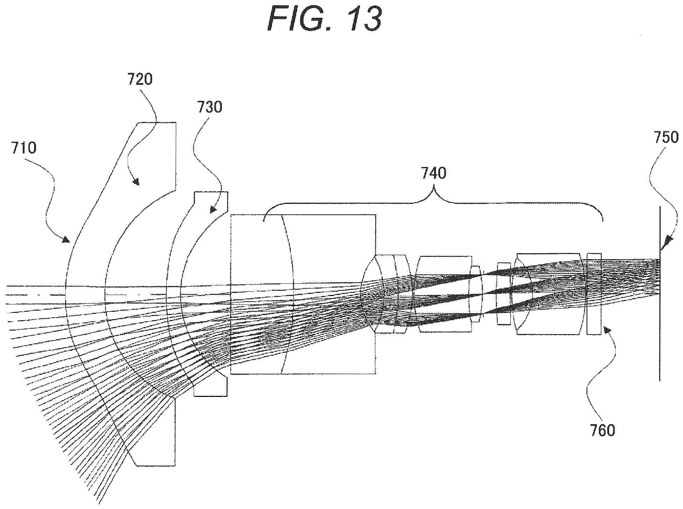

The structure of the imaging lens according to a second embodiment of the present invention will be described referring to Figure 13. This embodiment is formed by adding an IR filter 760 for absorbing infrared rays to an emission surface of the lens of the structure according to the first embodiment. The explanation previously described in the embodiment, which is omitted herein will apply to this embodiment unless otherwise specified.

Table 2 represents detailed structure of the imaging lens having the 1st and 3rd aspherical surfaces.

[Table 2]

| Surface No. | Curvature radius | Spacing | Refractive index, Abbe number | | | | |
|---|---|---|---|---|---|---|---|
| 1 | 9.83812 | 2.821811 | 583126, 5937 | | | | |
| | Aspheric constant | | | | | | |
| | K | -1 | | | | | |
| | A | -1.54E-05 | B | 2.21E-05 | C | -1.14E-06 | D | 2.42E-08 |
| | E | -2.87E-10 | F | 2.06E-12 | G | -8.87E-15 | H | 2.12E-17 |
| | J | -2.16E-20 | | | | | |
| 2 | 7.87327 | 4.395488 | | | | | |
| 3 | 14.44702 | 1.016295 | 583126, 5937 | | | | |
| | Aspheric constant | | | | | | |
| | K | 0 | | | | | |
| | A | -6.85E-04 | B | 9.21E-05 | C | -3.73E-06 | D | 8.83E-08 |
| | E | -1.17E-09 | F | 4.07E-12 | G | 3.05E-14 | H | 9.90E-16 |
| | J | -1.61E-17 | | | | | |
| 4 | 6.85889 | 3.546173 | | | | | |
| 5 | 1019.6314 | 4.525556 | 739998, 283 | | | | |
| 6 | -17.79269 | 4.745216 | 487490, 7024 | | | | |
| 7 | 3.89526 | 1.701511 | | | | | |
| 8 | -5.48851 | 1 | 740769, 2779 | | | | |
| 9 | -11.03758 | 1 | 743997, 4479 | | | | |
| 10 | -7.30426 | 0.1 | | | | | |
| 11 | 8.09088 | 3.893378 | 739998, 283 | | | | |
| 0.5 | 10.03272 | 1 | 487490, 7024 | | | | |
| 12 | -8.7045 | 0.1 | | | | | |
| STO | INFINITY | 0.882459 | | | | | |
| 13 | 20.21962 | 1 | 720467, 3471 | | | | |
| 14 | 54.39247 | 0.1 | | | | | |
| 15 | 9.04135 | 1.534717 | 603112, 6064 | | | | |
| 16 | -3.41186 | 3.767283 | 755199, 2751 | | | | |
| 17 | -9.14347 | 0.1 | | | | | |
| 18 | INFINITY | 1 | 514000, 52 | | | | |
| 19 | INFINITY | 4.23947 | | | | | |
| IMG | INFINITY | 0.007603 | | | | | |

Referring to this table, the 18th and 19th surfaces correspond to the added IR filter.

The structure shown in Figure 13 and Table 2 provides the imaging lens which allows the long-distance shooting with high angular resolution for the front surface, and the shooting at wider incident angle for the peripheral direction.

Installing the imaging lens according to the embodiment in the imaging device allows the long-distance shooting with high angular resolution for the front surface, and the shooting at wider incident angle for the peripheral direction using the light having infrared ray removed. Application of the stereo camera having the imaging lens according to the embodiment installed, or two or more imaging devices to the distance measuring system as shown in Figure 3 allows the long distance measurement with high angular resolution for the front surface, and the short distance measurement at wider incident angle for the peripheral direction using the light having infrared ray removed. Mounting the distance measuring system on the car makes it possible to actualize the function of automatically following the vehicle ahead, and the function of preventing collision in the curve or at the intersection.

This embodiment provides the similar effects to those derived from the first embodiment. The embodiment allows the shooting with the light having infrared ray removed.

<Third embodiment>

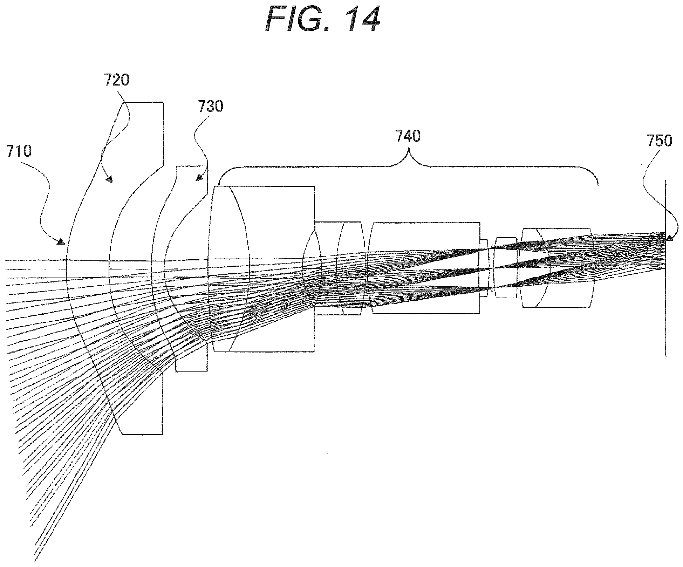

The structure of the imaging lens according to a third embodiment of the present invention will be described referring to Figure 14. This embodiment employs two aspherical lenses 720, 730 for satisfying the relation between the incident angle and image height. However, aberration has to be reduced for further improving the distance measurement accuracy. Therefore, both surfaces of the respective lenses 720, 730 are made aspherical. The explanation previously described in the embodiment, which is omitted herein will apply to this embodiment unless otherwise specified. Table 3 represents the detailed structure of the imaging lens.

[Table 3]

| Surface No. | Curvature radius | Spacing | Refractive index, Abbe number | | | | | |
|---|---|---|---|---|---|---|---|---|
| 1 | 10.66009 | 3.022866 | 583130.5946 | | | | | |
| | | | Aspheric constant | | | | | |
| | K | | -1 | | | | | |
| | A | -8.31E-05 | B | 2.27E-05 | C | -1.15E-06 | D | 2.43E-08 |
| | E | -2.87E-10 | F | 2.06E-12 | G | -8.87E-15 | H | 2.12E-17 |
| | J | -2.16E-20 | | | | | | |
| 2 | 9.90852 | 3.009004 | | | | | | |
| | | | Aspheric constant | | | | | |
| | K | | -11.905382 | | | | | |
| | A | 1.12E-03 | B | -5.00E-06 | C | 1.84E-08 | D | 2.08E-11 |
| | E | -4.99E-12 | F | -1.03E-22 | G | -8.80E-26 | H | -4.13E-29 |
| | J | 8.57E-32 | | | | | | |
| 3 | 14.67946 | 0.938792 | 583130.5946 | | | | | |
| | | | Aspheric constant | | | | | |
| | K | | 0 | | | | | |
| | A | -4.65E-05 | B | 8.00E-05 | C | -3.91E-06 | D | 8.76E-08 |
| | E | -1.16E-09 | F | 4.41E-12 | G | 3.26E-14 | H | 9.86E-16 |
| | J | -1.47E-17 | | | | | | |
| 4 | 5.24361 | 3.060758 | | | | | | |
| | | | Aspheric constant | | | | | |
| | K | | -0.253816 | | | | | |
| | A | 9.89E-04 | B | -6.15E-05 | C | 7.97E-07 | D | -2.47E-08 |
| | E | -8.61E-22 | F | 7.04E-24 | G | 2.83E-27 | H | 8.77E-31 |
| | J | 1.25E-34 | | | | | | |
| 5 | 38.70809 | 2.949656 | 740770.2776 | | | | | |
| 6 | -12.28718 | 3.711275 | 487489.7044 | | | | | |
| 7 | 4.72557 | 1.366465 | | | | | | |
| 8 | -7.81479 | 1.036425 | 740770.2776 | | | | | |
| 9 | 9.54991 | 2.080282 | 744002.4472 | | | | | |
| 10 | -15.05472 | 0.116904 | | | | | | |
| 11 | 13.14818 | 7.805392 | 740770.2776 | | | | | |
| 12 | 20.67398 | 0.764858 | 487489.7044 | | | | | |
| 13 | -14.3352 | 0.206229 | | | | | | |
| STO | INFINITY | 0.1 | | | | | | |
| 14 | 10.81714 | 1.687366 | 723417.3799 | | | | | |
| 15 | -55.73642 | 0.131624 | | | | | | |
| 16 | 12.06491 | 2.224974 | 603111.6069 | | | | | |
| 17 | -4.18447 | 3.157945 | 805181.2546 | | | | | |
| 18 | -10.48254 | 4.978568 | | | | | | |
| 19 | INFINITY | 0.000489 | | | | | | |
| 20 | INFINITY | -0.00254 | | | | | | |
| 21 | INFINITY | 0 | | | | | | |
| IMG | INFINITY | 0 | | | | | | |

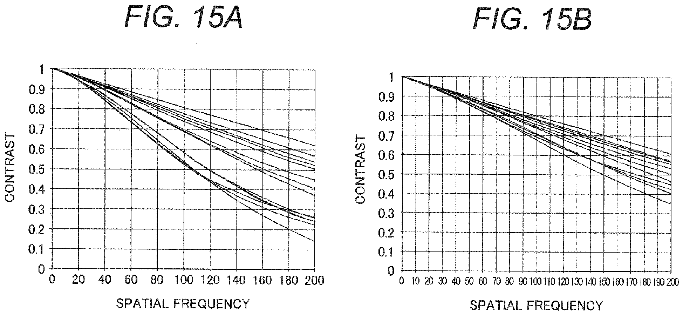

The 1st, 2nd, 3rd, and 4th surfaces are aspherical. Figure 15 represents each transfer function (MTF) between contrast and spatial frequency of lenses according to the first and the third embodiments. The x-axis represents the spatial frequency, and the y-axis represents the contrast (amplitude of MTF). The graph shows MTFs in the sagittal direction and meridional direction at every 10° in the angular range from 0° to 60°. Figure 15A shows the results of the first embodiment (lens with aspherical surface on one side), and Figure 15B shows the results of the lens with aspherical surfaces on both sides. In the case of the aspherical surface on one side of the lens (Figure 15A), the amplitude of the MTF becomes small at the angle around the inflection point θs(20°). Meanwhile, in the case of the aspherical surfaces on both sides of the lens (Figure 15B), the appropriate amplitude of MTF is held even at the angle around the θs(20°).

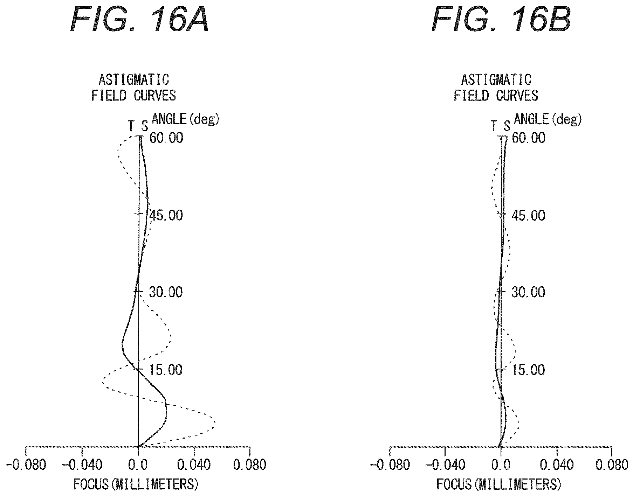

Figure 16 represents each field curvature of lenses according to the first and the third embodiments, respectively. In the case of the lens with aspherical surface on one side (Figure 16A), the image surface fluctuates undulately at the angle around θs(20°) ranging from 10° to 20°. In the case of the lens with aspherical surfaces on both sides (Figure 16B), the amplitude of the undulate fluctuation is reduced to approximately 1/3 or less.

The structure as shown in Figure 14 and Table 3 is capable of providing the imaging lens which allows the long-distance shooting with high angular resolution for the front surface, and the shooting at wider incident angle for the peripheral direction. Each of the two lenses has aspherical surfaces on both sides, making it possible to reduce aberration.

Installing the imaging lens according to the embodiment in the imaging device allows the long-distance shooting with high angular resolution for the front surface, and the shooting at wider incident angle for the peripheral direction. Application of the stereo camera having the imaging lens according to the embodiment installed, or two or more imaging devices to the distance measuring system as shown in Figure 3 allows the long distance measurement with high angular resolution for the front surface, and the short distance measurement at wider incident angle for the peripheral direction. Making both surfaces of the two respective lenses aspherical may reduce aberration, thus improving the distance measurement accuracy. Mounting the distance measuring system on the car makes it possible to actualize the function of automatically following the vehicle ahead, and the function of preventing collision in the curve or at the intersection.

This embodiment provides the similar effects to those derived from the first embodiment. Making both surfaces of the two respective lenses aspherical may reduce aberration, thus improving the distance measurement accuracy of the distance measuring system.

<Fourth embodiment>

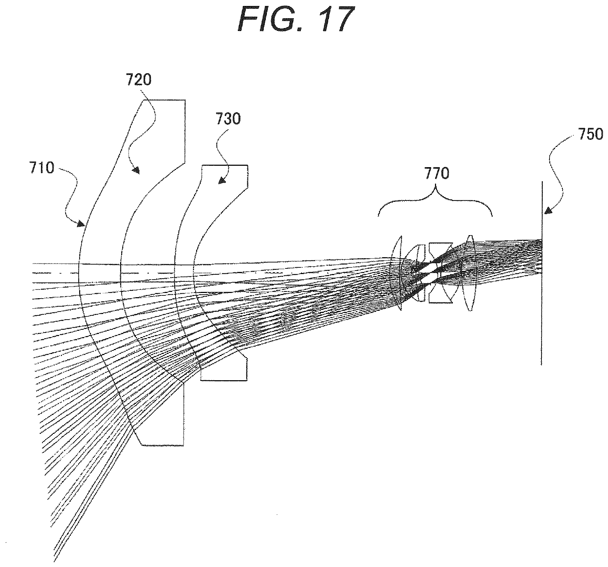

The structure of the imaging lens according to a fourth embodiment of the present invention will be described referring to Figure 17. The imaging lens structure according to this embodiment is mostly characterized by two aspherical lenses on the incident surface. Therefore, the subsequent rear lens group may be constituted by the existing imaging lens 770. It is possible to design the lens group by means of the existing imaging lens at the view angle approximately 1/3 of the first aspherical lens 720. The view angle of the rear lens group is in the range from 30° to 40°. Therefore, it is appropriate to employ the standard lens structure for camera. Figure 17 represents the lens structure using Gauss type lens for the rear lens group, which has been frequently employed as the standard lens structure. Table 4 represents the example of the imaging lens structure.

[Table 4]

| Surface No. | Curvature radius | Spacing | Refractive index, Abbe number | | | | | |
|---|---|---|---|---|---|---|---|---|
| 1 | 10.59484 | 2.672369 | 583130.5946 | | | | | |
| | Aspheric constant | | | | | | | |
| | K | | -1 | | | | | |
| | A | -8.31E-05 | B | 2.27E-05 | C | -1.15E-06 | D | 2.43E-08 |
| | E | -2.87E-10 | F | 2.06E-12 | G | -8.87E-15 | H | 2.12E-17 |
| | J | -2.16E-20 | | | | | | |
| 2 | 10.1792 | 3.428569 | | | | | | |
| | ASP | | | | | | | |
| | K | | -9.117742 | | | | | |
| | A | 8.74E-04 | 8 | 1.65E-06 | C | -1.49E-08 | D | -5.074E-10 |
| 3 | 15.16681 | 1.19998 | 583130.5946 | 100 | 100 | 0 | | |
| | Aspheric constant | | | | | | | |
| | K | | 0 | | | | | |
| | A | -4.65E-05 | B | 8.00E-05 | G | -3.91E-06 | D | 8.76E-08 |
| | E | -1.16E-09 | F | 4.41E-12 | G | 3.26E-14 | H | 9.86E-16 |
| | J | -14.7E-17 | | | | | | |
| 4 | 5.25759 | 12.48894 | | | | | | |
| | Aspheric constant | | | | | | | |
| | K | | -0.24697 | | | | | |
| | A | 9.36E-04 | B | | C | 7.75E-07 | D | -2.25E-08 |
| 5 | 4.70246 | 0.638 | 745600.446 | | | | | |

(continued)

| Surface No. | Curvature radius | Spacing | Refractive index, Abbe number | | | | | |
|---|---|---|---|---|---|---|---|---|
| 6 | 22.45815 | 0.0825 | | | | | | |
| 7 | 2.21926 | 0.935 | 620000.6 | | | | | |
| 8 | 8.58302 | 0.1925 | 621000.362 | | | | | |
| 9 | 1.37776 | 0.715 | | | | | | |
| STO | INFINITY | 0.495 | | | | | | |
| 10 | -2.02399 | 0.1925 | 689000.309 | | | | | |
| 11 | 3.02497 | 1.265 | 745600.466 | | | | | |
| 12 | -2.83257 | 0.055 | | | | | | |
| 3 | 6.79264 | 0.935 | 745600.446 | | | | | |
| 4 | -11.2728 | 4.15705 | | | | | | |
| IMG | INFINITY | 0.005298 | | | | | | |

Referring to the example of the structure, the 5th and subsequent surfaces correspond to the Gauss type.

The structure as shown in Figure 17 and Table 4 is capable of providing the imaging lens which allows the long-distance shooting with high angular resolution for the front surface, and the shooting at wider incident angle for the peripheral direction. Each of the two lenses has aspherical surfaces on both sides, making it possible to reduce aberration. Furthermore, the two aspherical lenses may be combined with the existing rear lens group so as to constitute the imaging lens.

Installing the imaging lens according to the embodiment in the imaging device allows the long-distance shooting with high angular resolution for the front surface, and the shooting at wider incident angle for the peripheral direction. Application of the stereo camera having the imaging lens according to the embodiment installed, or two or more imaging devices to the distance measuring system allows the long distance measurement with high angular resolution for the front surface, and the short distance measurement at wider incident angle for the peripheral direction. Making both surfaces of the two respective lenses aspherical may reduce aberration, thus improving the distance measurement accuracy. Mounting the distance measuring system on the car makes it possible to actualize the function of automatically following the vehicle ahead, and the function of preventing collision in the curve or at the intersection.

This embodiment provides the similar effects to those derived from the first embodiment. The two aspherical lenses may be combined with the existing rear lens group so as to constitute the imaging lens. Making both surfaces of the two lenses aspherical may reduce aberration, thus improving the distance measurement accuracy of the distance measuring system.

<Fifth embodiment>

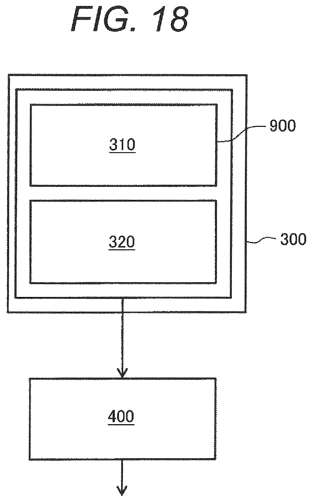

Figure 18 represents an example of the imaging device according to a fifth embodiment of the present invention. The explanation previously described in any one of the first to the fourth embodiments, which is omitted herein will apply to this embodiment unless otherwise specified.

This embodiment provides the imaging device including the imaging unit 300 constituted by the imaging optical system 310, the imaging element 320, and a lens-barrel 900, all of which have been described in any one of the first to the fourth embodiments. The thus structured imaging device is capable of satisfying requirements of both the wide view angle and resolution by means of the imaging element with finite size. It is possible to add the video processor serving to correct distortion, brightness, and color of the video to the above-described structure if needed.

The imaging device is configured to satisfy the requirements of both the wide view angle and high resolution. The imaging device ensures to suppress image deterioration even in the case of subjecting the video in the wide-angle region where distortion occurs to the process for correcting the distortion through expansion of the video data from the imaging element 32.

The two imaging devices as shown in Figure 18 are applied to the distance measuring system as shown in Figure 3 so as to allow the long distance measurement with high angular resolution for the front surface, and the short distance measurement at wide incident angle for the peripheral direction. Mounting the distance measuring system on the car makes it possible to actualize the function of automatically following the vehicle traveling ahead, and the function of preventing collision in the curve or at the intersection.

The embodiment provides the imaging device using the imaging lens which ensures both the wider shooting view angle and the required angular resolution over the entire shooting range, and the distance measuring system.

The present invention is not limited to the embodiments as described above, but includes various modifications. For example, the embodiments are described in detail for readily understanding of the present invention which is not necessarily limited to the one equipped with all structures as described above. It is possible to replace a part of the structure of one embodiment with the structure of another embodiment. The one embodiment may be provided with an additional structure of another embodiment. It is further possible to add, remove, and replace the other structure to, from and with a part of the structure of the respective embodiments.

Reference Signs List

110...perspective projection (general lens),
120...orthographic projection,
160...image height,
210...change rate of incident angle in perspective projection,
220...change rate of incident angle in orthographic projection,
230...change rate of incident angle expressed by $\{(D(\theta max)-D(0))/\theta max\theta\}\theta p+D(0)$,
261...inflection point,
270...change rate of incident angle,
280...change rate of incident angle,
300...image shooting unit,
310...imaging optical system,
320...imaging element,
321...pixel,
400...video processor,
500...distance calculation unit,
600...casing,
710...first lens incident surface,
720...first aspherical lens,
730...second aspherical lens,
740...spherical lens group,
750...sensor surface,
760...IR filter,
770...Gauss type lens
800...object,
810A...position of object with its image formed on the imaging element 320A,
810B...position of object with its image formed on the imaging element 320B,
900...lens-barrel,
901...relation between incident angle and angular resolution required for follow-up operation,
902...relation between incident angle and angular resolution required for preventing collision (curve),
903...relation between incident angle and angular resolution required for preventing collision (intersection)

**Claims**

1. An imaging lens comprising at least a first lens and a second lens, the first lens having a first surface on which a principal light beam is made incidence, and a second surface from which the principal light beam is emitted, the second lens having a third surface on which the principal light beam emitted from the first lens is made incidence, and a fourth surface from which the principal light beam is emitted,

wherein upon incidence of the principal light beam on the first lens, an incident angle $\theta n$ at which the principal light beam is made incidence on the first surface at right angles is allowed to be positioned other than a center of the first surface.

**2.** The imaging lens according to claim 1,
wherein the incident angle θn is in a range from 10° to 30°.

**3.** The imaging lens according to claim 2,
wherein the first surface of the first lens, and the third surface of the second lens are aspherical, the first lens and the second lens being arranged at an incident surface side at which the principal light beam is made incidence.

**4.** The imaging lens according to claim 2, wherein each of the first lens and the second lens arranged at the incident surface side of the principal light beam has aspherical surfaces on both sides.

**5.** The imaging lens according to claim 3, wherein:

a rear lens group is arranged to the rear of the first lens and the second lens; and
the rear lens group has a Gauss type structure.

**6.** The imaging lens according to claim 2, wherein:

a change rate of an image height per incident angle at a maximum incident angle θmax on the first lens is larger than 0; and
the image height y(θ) satisfies a relation expressed by 1.5 < (y(θ**s**)/θs)/{(y(θmax) - y(θs)/(θmax-θs) < 3.0 with respect to a transition incident angle θs at which inflection occurs in a change rate of a view angle per image height D(θ)=1/(dy(θ)/dθ).

**7.** An imaging device using the imaging lens according to claim 2, wherein the imaging device is mounted on a vehicle.

**8.** A distance measuring system comprising at least two imaging devices each using the imaging lens according to claim 2, a power supply unit, a video processing unit, a distance calculation unit, and a casing.

**9.** The distance measuring system according to claim 8, wherein the distance measuring system is mounted on a vehicle.

FIG. 1

FIG. 2

# FIG. 3

# FIG. 4

## FIG. 5

## FIG. 6

# FIG. 7A

800A

800B

310

320

321

# FIG. 7B

800A

800B

310

320

321

# FIG. 8

CHANGE RATE OF THE INCIDENT ANGLE PER IMAGE HEIGHT D

901

902

903

$\theta$ p

$\theta$ max

0      20      40      60      80

INCIDENT ANGLE $\theta$

# FIG. 9

# FIG. 10

## FIG. 11A

## FIG. 11B

# FIG. 12

# FIG. 13

# FIG. 14

FIG. 15A

FIG. 15B

# FIG. 16A

ASTIGMATIC
FIELD CURVES

ANGLE (deg)

T  S
60.00

45.00

30.00

15.00

-0.080   -0.040   0.0   0.040   0.080
FOCUS (MILLIMETERS)

# FIG. 16B

ASTIGMATIC
FIELD CURVES

ANGLE (deg)

T  S
60.00

45.00

30.00

15.00

-0.080   -0.040   0.0   0.040   0.080
FOCUS (MILLIMETERS)

# FIG. 17

# FIG. 18

<div align="center">

**INTERNATIONAL SEARCH REPORT**

</div>

| | International application No. |
|---|---|
| | PCT/JP2016/051280 |

**A. CLASSIFICATION OF SUBJECT MATTER**
*G02B13/04*(2006.01)i, *G02B13/18*(2006.01)i

According to International Patent Classification (IPC) or to both national classification and IPC

**B. FIELDS SEARCHED**

Minimum documentation searched (classification system followed by classification symbols)
G02B13/04, G02B13/18

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 51-102630 A  (Nippon Kogaku Kogyo Kabushiki Kaisha),<br>10 September 1976 (10.09.1976),<br>examples 1 to 2; specification, page 2, upper right column, line 16 to lower right column, line 15<br>(Family: none) | 1-4,6<br>7-9<br>5 |
| X<br>Y<br>A | JP 48-90523 A  (Nippon Kogaku Kogyo Kabushiki Kaisha),<br>26 November 1973 (26.11.1973),<br>examples 1 to 12; specification, page 2, upper right column, line 11 to lower right column, line 10<br>(Family: none) | 1-4,6<br>7-9<br>5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    11 March 2016 (11.03.16) | Date of mailing of the international search report<br>    22 March 2016 (22.03.16) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/051280

C (Continuation). DOCUMENTS CONSIDERED TO BE RELEVANT

| Category* | Citation of document, with indication, where appropriate, of the relevant passages | Relevant to claim No. |
|---|---|---|
| X<br>Y<br>A | JP 47-27021 A (Nippon Kogaku Kogyo Kabushiki Kaisha), 26 October 1972 (26.10.1972), example 1; specification, page 2, lower right column, line 19 to page 3, upper right column, line 16 (Family: none) | 1-4,6<br>7-9<br>5 |
| X<br>Y<br>A | JP 2013-134303 A (Nikon Corp.), 08 July 2013 (08.07.2013), examples 1 to 2; fig. 1, 2, 7, 8 (Family: none) | 1-4,6<br>7-9<br>5 |
| X<br>Y<br>A | JP 2012-163746 A (Canon Inc.), 30 August 2012 (30.08.2012), examples 1 to 5; fig. 1, 3, 5, 7, 9 & US 2012/0200940 A1 | 1-4,6<br>7-9<br>5 |
| X<br>Y | JP 2004-252101 A (Nikon Corp.), 09 September 2004 (09.09.2004), examples 1 to 2; fig. 1, 3 (Family: none) | 1-6<br>7-9 |
| Y | JP 2011-175198 A (Ricoh Co., Ltd.), 08 September 2011 (08.09.2011), paragraphs [0002] to [0004], [0036] to [0038] (Family: none) | 7-9 |
| Y | JP 2010-271429 A (Ricoh Co., Ltd.), 02 December 2010 (02.12.2010), claims; paragraphs [0020], [0025] to [0031] (Family: none) | 7-9 |

Form PCT/ISA/210 (continuation of second sheet) (January 2015)

**EP 3 252 514 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004354572 A